# DEMANDE DE BREVET EUROPEEN

(11) **EP 2 210 496 A1**
(43) Date de publication de la demande: **28.07.2010**
(21) Numéro de dépôt: 10305090.2
(22) Date de dépôt: 26.01.2010
(51) Int. Cl.: A22C 25/02, A22C 25/08, A23L 3/36

(54) **Installation pour soumettre un liquide de traitement à un produit**

(30) Priorité: 27.01.2009 FR 0900335
(71) Demandeur: France Agro Industries, 44340 Bouguenais (FR)
(72) Inventeur: BESNARDEAU, Guy, 44860, SAINT-AIGNAN DE GRAND LIEU (FR)
(74) Mandataire: Michelet, Alain

(57) **Abrégé**

L'installation conforme à l'invention, pour soumettre un liquide de traitement (5) à un produit (3), comporte un convoyeur sans fin (2), du type ajouré, dont le brin supérieur (11'), de largeur L, constitue le plan de transport dudit produit (3), au-dessus duquel est prévu au moins un dispositif (4) pour asperger sur ledit produit (3) ledit liquide de traitement (5), et au-dessous duquel est prévu au moins un contenant (8) pour récupérer par gravité ledit liquide de traitement (5) auquel a été soumis ledit produit (3) et qui a traversé ledit convoyeur sans fin (2) ; cette installation comporte encore - des moyens (9, 10) pour recycler ledit liquide de traitement (5) depuis le contenant de récupération (8) vers ledit dispositif d'aspersion (4), et - des moyens échangeurs de calories (6) pour chauffer ou refroidir ledit liquide de traitement (5). Conformément à l'invention, lesdits moyens échangeurs de calories (6) sont disposés, au moins pour partie, entre ledit brin supérieur de tapis (11') et ledit contenant de récupération (8), pour agir sur ledit liquide de traitement (5) lors de son flux gravitaire descendant.

## Description

La présente invention concerne les installations adaptées pour soumettre un liquide de traitement à un produit, en particulier, mais non exclusivement, pour soumettre à un produit de la mer type crevettes ou langoustines, un liquide de décongélation, de cuisson, de refroidissement, de congélation et/ou de lavage.

Entre le moment de leur capture et leur présentation à la vente, il est connu de faire subir aux crevettes différentes opérations de traitement, tel un refroidissement, une congélation, une décongélation, une cuisson, une simple mise à température, un lavage, une désinfection, un glazurage ou encore un traitement du type au métabisulfite.

De manière classique, ces opérations sont mises en oeuvre sur des chaînes industrielles, par des moyens d'application d'un liquide approprié, généralement de l'eau ou une saumure. Pour cela, les produits à traiter peuvent être soumis à l'action de bains adaptés (comme décrit dans le document FR-2 756 146), ou placés sous des rampes d'aspersion ou des contenants perforés d'aspersion (comme décrit dans le document EP-1 622 461).

Dans ces dernières installations, les liquides de traitement récupérés sont recyclés vers les structures d'aspersion en passant par des moyens échangeurs de calories adaptés pour les refroidir ou les réchauffer, selon le cas.
Cela implique la présence de structures de pompage et de moyens échangeurs de calories ayant des performances relativement élevées, donc complexes, onéreux et souvent volumineux.
A titre de moyens échangeurs de calories, il est connu d'utiliser des échangeurs de type à plaques qui sont compacts et performants, mais qui entraînent des pertes de charge et qui présentent des risques élevés de bouchage par les impuretés, ainsi que des risques de gel en cas d'appauvrissement de la saumure.

De plus, généralement, les unités industrielles en question sont éloignées des distributeurs (poissonniers, magasins ...), ce qui engendre des frais de transport onéreux et ce qui limite la fraîcheur des produits fournis.

La présente invention propose une nouvelle structure d'installation de traitement, simple, compacte et permettant des gains d'énergie au niveau des pompes.

Ainsi, l'installation selon l'invention, pour soumettre à un produit un liquide de traitement, est du type comportant un convoyeur sans fin, du type ajouré, dont le brin supérieur, de largeur L, constitue le plan de transport dudit produit, au-dessus duquel est prévu au moins un dispositif pour asperger sur ledit produit, ledit liquide de traitement, et au-dessous duquel est prévu au moins un contenant pour récupérer par gravité ledit liquide de traitement auquel a été soumis ledit produit et qui a traversé ledit convoyeur sans fin, laquelle installation comporte encore - des moyens de pompage pour recycler ledit liquide de traitement depuis ledit contenant de récupération vers ledit dispositif d'aspersion, et - des moyens échangeurs de calories pour chauffer ou refroidir ledit liquide de traitement.
Conformément à l'invention, cette installation est caractérisée par le fait que lesdits moyens échangeurs de calories sont disposés, au moins pour partie, entre ledit brin supérieur de tapis et ledit contenant de récupération, pour agir sur ledit liquide de traitement lors de son flux naturel gravitaire descendant.

Selon une forme de réalisation préférée, les moyens échangeurs de calories disposés entre le brin supérieur de tapis et le contenant de récupération, comprennent une structure à ruissellement formée d'une pluralité de plaques parallèles échangeuses de calories, disposées verticalement ou sensiblement verticalement et à distance les unes des autres, traversées par un ou plusieurs tubes dans lesquels circule un fluide frigorigène ou caloporteur, selon le cas, laquelle structure à ruissellement a une largeur A égale ou sensiblement égale à la largeur L du convoyeur de transport sans fin, et une longueur B qui correspond à une partie de la longueur de ce convoyeur. Les plaques de cette structure à ruissellement sont avantageusement disposées verticalement ou sensiblement verticalement, de manière transversale par rapport à la direction d'avancement du convoyeur sans fin ; de préférence, elles s'étendent sur toute ou pratiquement toute la largeur L dudit convoyeur sans fin et elles sont espacées les unes des autres d'une distance comprise entre 2 et 10 mm. Ces plaques sont traversées par une pluralité de tubes raccordés entre eux, dans lesquels circule le fluide frigorigène ou caloporteur, selon le cas, lesquels tubes s'étendent perpendiculairement auxdites plaques et sont répartis uniformément ou sensiblement uniformément sur leur surface. Une telle structure de moyens échangeurs de calories peut être très facilement intégrée dans la chaîne de traitement en limitant les pertes de charge ; elle est encore pratiquement insensible au gel et les risques de bouchage sont limités.

La compacité de l'installation peut encore être optimisée en positionnant les moyens échangeurs de calories entre le brin supérieur et le brin retour du convoyeur sans fin.

Selon une autre particularité, le dispositif pour asperger le produit par le liquide de traitement consiste en un contenant fermé comprenant une face de dessus et une face de dessous raccordées par une ceinture de parois latérales, ladite face de dessous étant munie d'une pluralité d'orifices uniformément ou sensiblement uniformément répartis, la largeur C dudit contenant étant égale ou sensiblement égale à la largeur L du convoyeur sans fin et à la largeur A des moyens échangeurs de calories, et sa longueur D correspondant approximativement à la longueur B desdits moyens échangeurs de calories.

Toujours selon l'invention, l'installation comprend un organe de filtration plan, disposé entre les moyens échangeurs de calories et le contenant de récupération du liquide de traitement, pour récupérer les éventuels déchets provenant du produit traité, lequel organe de filtration est incliné par rapport à l'horizontale pour orienter lesdits déchets sur le côté, par le flux descendant du liquide de traitement.

Selon une forme de réalisation particulière, le contenant de récupération comprend une ouverture supérieure à section carrée ou rectangulaire, dont la largeur E correspond approximativement à la largeur L du convoyeur sans fin, et dont la longueur F correspond approximativement à la longueur B des moyens échangeurs de calories.

L'invention concerne encore une unité de traitement de produits comportant au moins deux installations de traitement telles que définies ci-dessus, chacune desdites installations comprenant :
- un dispositif pour asperger en liquide de traitement le produit porté par le brin supérieur d'un convoyeur sans fin,
- des moyens échangeurs de calories, en forme de structure à ruissellement, disposés sous ledit brin supérieur de convoyeur,
- un organe de filtration disposé sous lesdits moyens échangeurs de calories,
- un contenant de récupération dudit liquide de traitement, disposé sous ledit organe de filtration, et
- des moyens de pompage pour recycler ledit liquide de traitement vers ledit dispositif d'aspiration,
lesdits moyens échangeurs de calories desdits deux ensembles ou plus, assurant un traitement différent sur ledit produit.

L'invention sera encore illustrée, sans être aucunement limitée, par la description suivante, en association avec les dessins annexés dans lesquels :
- la figure 1 est une vue schématique, en perspective, d'une installation de traitement conforme à l'invention ;
- la figure 2 montre l'installation de la figure 1 vue du côté de l'une de ses extrémités ;
- la figure 3 est une vue schématique, de côté, montrant une unité de traitement selon l'invention équipée d'une pluralité d'installations de traitements successives, permettant de soumettre aux produits différents liquides de traitement ayant des températures différentes.

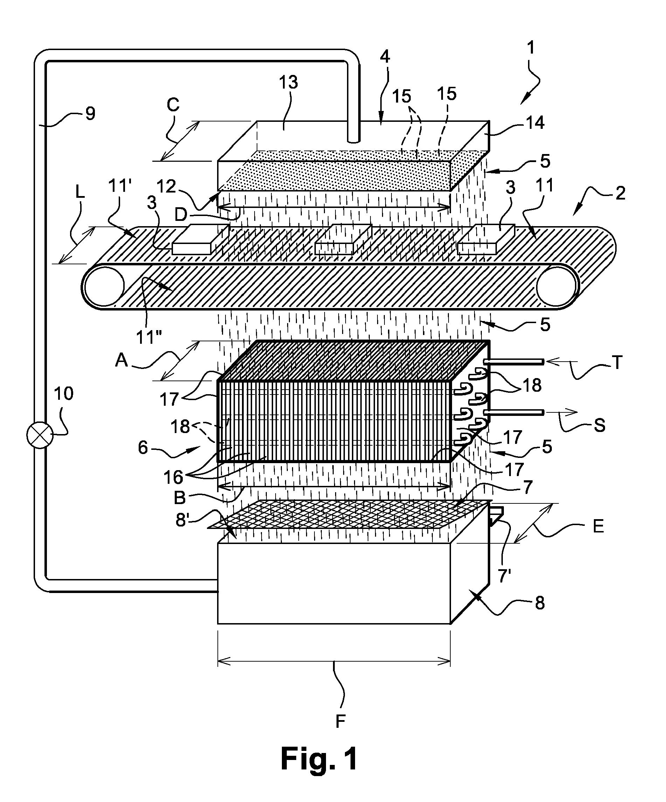

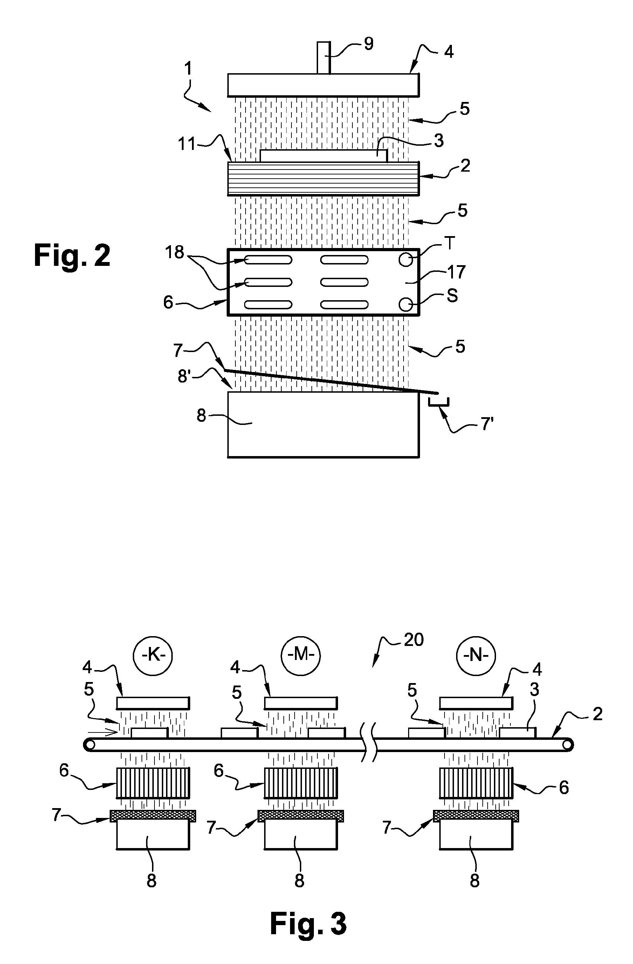

Comme on peut le voir sur les figures 1 et 2, l'installation de traitement 1 comprend un convoyeur sans fin 2, du type ajouré, pour le transport des produits 3 que l'on souhaite traiter, au-dessus duquel est ménagé un dispositif 4 d'aspersion en liquide de traitement 5 et au-dessous duquel on trouve, disposés gravitairement sous ledit dispositif d'aspersion 4 : les moyens échangeurs de calories 6, un organe de filtration 7 et un contenant 8 de récupération du liquide de traitement. D'autre part, une tuyauterie adaptée 9, avec des moyens de pompage 10, assurent le recyclage du liquide 5 récupéré par le contenant 8, vers le dispositif d'aspersion 4.

Le tapis 11 du convoyeur 2 a une largeur L et une longueur adaptée à l'application mise en oeuvre. Il comporte un brin supérieur 11' qui sert de plan de transport pour les produits 3, et un brin retour 11 ". Ce tapis 11 peut être du type à mailles ou à barrettes, lui conférant une structure ajourée, c'est-à-dire permettant au liquide de traitement 5 de le traverser.

Le dispositif d'aspersion 4 consiste en un contenant clos comprenant une face de dessous 12 et une face de dessus 13 raccordées par une ceinture de parois 14. La face de dessous 12, plane, s'étend parallèlement au brin supérieur 11' du tapis 11, à distance du dessus de ce dernier et dans l'encombrement d'une partie de sa surface. Cette face de dessous 12 du dispositif d'aspersion 4 a une largeur C égale ou sensiblement égale à la largeur L du tapis 11 et une longueur D correspondant à une partie de la longueur du tapis 11 ; elle comporte une pluralité d'orifices 15, uniformément ou sensiblement uniformément répartis sur sa surface, de manière à permettre l'aspersion ou l'arrosage homogène, par le liquide de traitement 5, des produits 3 transportés.

L'alimentation du contenant d'aspersion 4 en liquide de traitement 5 s'effectue par la tuyauterie 9 qui aboutit au niveau de la face de dessus 13.

Les moyens échangeurs de calories 6 consistent en une structure à ruissellement disposée sous le flux de liquide de traitement 5 provenant du dispositif d'aspersion 4 et du convoyeur sans fin 2, de manière à réchauffer ou refroidir ce flux de liquide, selon le cas. Cette structure à ruissellement 6 est formée d'une pluralité de plaques parallèles 16, réalisées en un matériau ayant un bon coefficient d'échange thermique (par exemple de l'acier), légèrement écartées les unes des autres (d'une distance comprise entre 2 et 10 mm, avantageusement voisine de 5 mm) et disposées verticalement. Ces plaques 16 ont une épaisseur de l'ordre de 1 à 2 mm ; elles sont portées par un châssis support 17 et elles sont traversées par une pluralité de tubes 18, raccordés entre eux, avec une arrivée T et une sortie S, au sein desquels circule un fluide frigorigène ou caloporteur, selon que l'on souhaite refroidir ou réchauffer le flux de liquide 5.

Les tubes 18 réalisent une succession d'allers et de retours ; ils s'étendent perpendiculairement auxdites plaques échangeuses 16, avec des raccordements extérieurs coudés, et ils sont uniformément ou sensiblement uniformément répartis sur la surface desdites plaques 16.

De préférence, les plaques 16 s'étendent de manière transversale par rapport à la direction d'avancement du convoyeur sans fin 2 ; elles sont adaptées en dimensions et en nombre pour que la largeur A de la structure de ruissellement 6 soit égale ou sensiblement égale à la largeur L du convoyeur 2 et à la largeur C du contenant d'aspersion 4, et pour que la longueur B de ladite structure de ruissellement 6 soit égale ou sensiblement égale à la longueur D dudit contenant d'aspersion 4.

Le liquide de traitement 5 provenant du convoyeur 2 (après passage sur les produits 3) tombe ainsi sur la structure à ruissellement 6 et vient lécher la surface des plaques 16, refroidies ou réchauffées, selon le cas, par le fluide frigorigène ou caloporteur circulant dans le réseau de tubes 18, de manière à lui conférer la température de traitement souhaitée. Par exemple, on peut utiliser de l'ammoniac ou du fréon à titre de fluide frigorigène, et une huile thermique, du glycol ou du chlorure de calcium réchauffé, à titre de fluide caloporteur. Le fluide frigorigène ou caloporteur est mis à température dans une centrale intégrée à l'installation, par tout moyen approprié connu de l'homme du métier. En outre, ce fluide frigorigène ou caloporteur est mis en circulation dans le réseau de tubes 18 par tout moyen connu approprié.

Entre les moyens échangeurs de calories 6 et le contenant 8 de récupération du liquide de traitement 5, on trouve l'organe de filtration 7 en forme de filtre métallique ou autre, dont la dimension de mailles est adaptée en fonction des impuretés, débris ou déchets que l'on souhaite évacuer. Cet organe de filtration 7 est en forme de panneau plan grillagé, disposé de manière inclinée par rapport à l'horizontale, de manière à ce que les déchets ou débris retenus soient orientés sur le côté (au niveau de l'extrémité basse du filtre) par le flux descendant du liquide de traitement 5. Les débris ou déchets peuvent alors être récupérés dans un contenant ou une goulotte latérale 7' adaptée à cet effet.

Après passage sur l'organe de filtration 7, le liquide de traitement 5 est réceptionné dans le contenant de récupération 8 dont les dimensions sont adaptées à cet effet. Pour cela, l'ouverture supérieure 8' du contenant 8, située à l'aplomb du dispositif d'aspersion 4 et des moyens échangeurs de calories 6, a une section carrée ou rectangulaire - dont la largeur E correspond approximativement (ou est un peu supérieure) à la largeur L du convoyeur 2 et aux largeurs C et A, respectivement du dispositif d'aspersion 4 et des moyens échangeurs de calories 6, et - dont la longueur F correspond approximativement (ou est un peu supérieure) aux longueurs D et B, respectivement du dispositif d'aspersion 4 et des moyens échangeurs de calories 6.

Sous les moyens échangeurs de calories 6, on peut aussi envisager d'utiliser un système de déflecteur, formant goulotte, pour orienter le flux de liquide 5 vers un contenant de récupération 8 de plus petite surface d'ouverture.

De la sorte, les produits 3 transportés par le brin supérieur 11' du tapis 11 sont soumis au liquide de traitement 5 provenant du dispositif d'aspersion 4. On notera que pour des besoins de représentation schématique, les produits 3 auxquels on veut soumettre le liquide de traitement 5 ont été représentés par de simples pavés parallélépipédiques sur les figures 1 et 2 ; bien entendu, ces produits 3 peuvent être de forme très diverse et être beaucoup plus rapprochés, sur une couche, voire superposés ou entassés, en particulier s'il s'agit de produits alimentaires (crevettes, langoustines, ...). Le liquide de traitement 5 peut être de l'eau, une saumure ou plus généralement tout liquide de qualité alimentaire, à température très élevée, chaude, ambiante, froide ou glacée, selon le type de traitement souhaité.
Après avoir rempli sa fonction de traitement des produits 3, le liquide 5 traverse les deux brins supérieur 11' et inférieur 11" du tapis ajouré 11, et il atteint par simple gravité les moyens échangeurs de calories 6, chargés de le remettre à température. Le liquide 5 est ensuite récupéré par le contenant 8, après passage sur l'organe de filtration 7, en vue de son retour vers le dispositif d'aspersion 4, par les moyens de recyclage précités 9, 10.

La structure des moyens échangeurs de calories 6 et leur positionnement particulier dans le flux descendant du liquide de traitement 5 permet de simplifier grandement la structure de l'installation et d'obtenir des gains d'encombrement sensibles ; on peut ainsi envisager la réalisation de petites unités de traitement très peu encombrantes, voire même mobiles, aptes à être mises en place directement sur le site de vente des produits (par exemple chez les poissonniers, ou au niveau des rayons poissonnerie de grands magasins). Cette structure particulière des moyens échangeurs permet aussi des gains importants d'énergie au niveau des pompes par limitation des pertes de charge sur le circuit. On réalise encore des économies par récupération d'énergie sur le compresseur frigorifique pour la décongélation.

On notera en outre que le positionnement particulier des moyens échangeurs de calories 6, juste sous les produits 3 à traiter, peut permettre de favoriser l'opération de traitement de ces produits 3. En effet, si on traite les produits 3 par la chaleur, la structure de chauffage 6 va générer de la vapeur d'eau qui, en remontant, va réchauffer les produits situés contre le tapis ; et cette particularité peut permettre de limiter le gradient de température rencontré par exemple dans les chaînes de cuisson de crevettes, entre les produits situés sur le dessus de l'entassement et ceux situés directement contre le tapis.

Pour limiter encore l'encombrement de l'installation, on peut envisager de positionner les moyens échangeurs de calories 6 entre les deux brins 11' et 11" du tapis 11.

L'aspect clos du contenant d'aspersion 4 permet de limiter les projections ou les éclaboussures lors de son alimentation en produit de traitement 5, par les moyens de recyclage 9, 10. D'autre part, les projections peuvent encore être limitées en prévoyant un capotage de l'installation sur le dessus, le dessous et les côtés (à l'exception d'une ouverture d'entrée et d'une ouverture de sortie pour les produits 3 au niveau du convoyeur sans fin 2).

D'une manière générale, une unité de traitement complète comporte avantageusement une pluralité d'installations de traitement telles que décrites ci-dessus, disposées successivement les unes à la suite des autres, pour faire subir aux produits 3 des traitements successifs par des liquides chauds et/ou froids différents.

Une unité 20 de traitement complète de ce type a été représentée schématiquement sur la figure 3, avec trois installations K, M et N disposées à la suite les unes des autres, assurant chacune une application d'un liquide de traitement 5 sur des produits 3 disposés sur un même convoyeur sans fin 2.

Ce type d'unité de traitement 20 peut par exemple convenir pour la cuisson de crevettes qui se présentent à l'origine sous la forme de pains ou de blocs congelés. Les blocs congelés de crevettes sont disposés sur le convoyeur sans fin 2, dans sa zone d'entrée. Au niveau de l'installation K, ils subissent un traitement de décongélation, par un liquide de traitement 5 consistant en de l'eau ou de la saumure, par exemple à une température de l'ordre de + 30°C à + 45°C, selon les caractéristiques de congélation, pendant par exemple 3 à 6 minutes. Ensuite, les crevettes décongelées subissent une opération de cuisson au niveau de l'installation M, par de l'eau, par exemple à une température de + 95°C, pendant 1,5 à 3 minutes, en particulier selon la taille des crustacés.
Enfin, l'installation N assure leur refroidissement en utilisant une saumure à - 6°C, appliquée pendant 3 à 6 minutes, en particulier selon la taille des crustacés.

La vitesse du convoyeur sans fin 2 et les longueurs des installations de traitement K, M et N sont adaptées selon les différents temps de traitement souhaités.

D'autres installations complémentaires peuvent être prévues dans cette unité, par exemple pour assurer la congélation des produits, après refroidissement (par exemple traitement des produits par une saumure à - 17°C, pendant 8 minutes ou plus selon la taille des produits), ou encore pour assurer un lavage à l'eau des produits (ce poste de lavage, par exemple intercalé entre les postes de cuisson M et de refroidissement N, peut utiliser de l'eau à température ambiante, ou refroidie ; selon le cas l'installation complémentaire correspondante comportera ou non des moyens échangeurs de calories).

On peut aussi envisager d'intégrer à cette unité un poste/installation de glazurage (après congélation), suivi d'un poste de refroidissement par air. Pour des crevettes fraîches, le poste/installation initial de décongélation peut être remplacé par un poste de lavage/désinfection associé éventuellement à un poste de traitement au métabisulfite.

En fonction des applications, les traitements successifs peuvent être réalisés sur différents tapis convoyeurs disposés en série et/ou en cascade et éventuellement superposés.

D'autre part, en cas de besoin, certaines ou toutes les installations K, M, N ... de l'unité de traitement peuvent comporter des moyens de chauffage ou de refroidissement d'appoint, pour le liquide de traitement 5, situés dans le contenant de récupération 8 ou sur le circuit de recyclage 9, 10.
Si nécessaire, au niveau d'une ou de plusieurs installations de traitement K, M, N ... les moyens échangeurs de calories 6 sont supprimés et remplacés intégralement par des moyens de chauffage ou de refroidissement prévus dans le contenant de récupération 8 ou sur le circuit de recyclage 9, 10.

De la même manière, d'autres unités de traitement peuvent être envisagées, fonctionnant sur le même principe, pour le traitement d'autres types de produits que des crevettes, par exemple pour des légumes ou des fruits. Dans ce cas, l'installation ou la succession d'installations seront adaptées à l'application prévue, tout comme le ou les liquides de traitement.

La présente invention s'applique tant aux unités industrielles aptes à traiter de grandes quantités de produits, qu'aux petites unités de traitement, par exemple adaptées pour le traitement de quelques kilogrammes par heure.

Le poste précité de refroidissement par air consiste en une enceinte adaptée dans laquelle les produits circulent, transportés sur un ou plusieurs convoyeurs sans fin. Dans cette enceinte, de manière avantageuse, un ou plusieurs ventilateurs assure(nt) la mise en circulation de l'air sur des moyens échangeurs de calories ayant une structure identique ou similaire aux moyens échangeurs 6 décrits ci-dessus. De préférence, ces moyens échangeurs sont positionnés entre les deux brins (supérieur et inférieur) des convoyeurs sans fin de transport des produits.
Leur structure est adaptée pour optimiser le refroidissement de l'air ambiant à la température souhaitée ; en particulier les plaques parallèles 16 peuvent être écartées ici les unes des autres d'une distance comprise entre 10 et 25 mm ; du fait de l'application au refroidissement d'un flux d'air, les plaques 16 ne sont pas obligatoirement disposées verticalement.

## Revendications

1. Installation pour soumettre un liquide de traitement (5) à un produit (3), laquelle installation comporte un convoyeur sans fin (2), du type ajouré, dont le brin supérieur (11'), de largeur L, constitue le plan de transport dudit produit (3), au-dessus duquel est prévu au moins un dispositif (4) pour asperger sur ledit produit (3) ledit liquide de traitement (5), et au-dessous duquel est prévu au moins un contenant (8) pour récupérer par gravité ledit liquide de traitement (5) auquel a été soumis ledit produit (3) et qui a traversé ledit convoyeur sans fin (2), laquelle installation comporte encore - des moyens (9, 10) pour recycler ledit liquide de traitement (5) depuis ledit contenant de récupération (8) vers ledit dispositif d'aspersion (4), et - des moyens échangeurs de calories (6) pour chauffer ou refroidir ledit liquide de traitement (5), **caractérisée en ce que** lesdits moyens échangeurs de calories (6) sont disposés, au moins pour partie, entre ledit brin supérieur de tapis (11') et ledit contenant de récupération (8), pour agir sur ledit liquide de traitement (5) lors de son flux gravitaire descendant.

2. Installation selon la revendication 1, **caractérisée en ce que** lesdits moyens échangeurs de calories (6) disposés entre ledit brin supérieur de tapis (11') et ledit contenant de récupération (8) comprennent une structure à ruissellement formée d'une pluralité de plaques parallèles (16) échangeuses de calories, disposées verticalement ou sensiblement verticalement et à distance les unes des autres, traversées par un ou plusieurs tubes (18) dans lesquels circule un fluide frigorigène ou caloporteur, laquelle structure à ruissellement (6) a une largeur A égale ou sensiblement égale à la largeur L dudit convoyeur, et une longueur B qui correspond à une partie de la longueur dudit convoyeur (2).

3. Installation selon la revendication 2, **caractérisée en ce que** les plaques (16) de la structure à ruissellement (6) s'étendent sur toute ou pratiquement toute la largeur L du convoyeur sans fin (2) et sont espacées les unes des autres d'une distance comprise entre 2 et 10 mm, lesdites plaques (16) étant traversées par une pluralité de tubes (18) raccordés entre eux, dans lesquels circule le fluide frigorigène ou caloporteur, lesquels tubes (18) s'étendent perpendiculairement auxdites plaques (16) et sont répartis uniformément ou sensiblement uniformément sur leur surface.

4. Installation selon l'une quelconque des revendications 2 ou 3, **caractérisée en ce que** les plaques (16) de la structure à ruissellement (6) sont disposées de manière transversale par rapport à la direction d'avancement du convoyeur sans fin (2).

5. Installation selon l'une quelconque des revendications 1 à 4, **caractérisée en ce que** lesdits moyens échangeurs de calories (6) sont disposés entre le brin supérieur (11') et le brin retour (11 ") du convoyeur sans fin (2).

6. Installation selon l'une quelconque des revendications 1 à 5, **caractérisée en ce que** le dispositif pour asperger le produit (3) par le liquide de traitement (5) consiste en un contenant fermé (4) comprenant une face de dessus (13) et une face de dessous (12) raccordées par une ceinture de parois latérales (14), ladite face de dessous (12) étant munie d'une pluralité d'orifices (15) uniformément ou sensiblement uniformément répartis, la largeur C dudit contenant (4) étant égale ou sensiblement égale à la largeur L du convoyeur sans fin (2) et à la largeur A des moyens échangeurs de calories (6), et sa longueur D correspondant approximativement à la longueur B desdits moyens échangeurs de calories (6).

7. Installation selon l'une quelconque des revendications 1 à 6, **caractérisée en ce qu'**elle comprend un organe de filtration plan (7), disposé entre les moyens échangeurs de calories (6) et le contenant (8) de récupération du liquide de traitement (5), pour récupérer les éventuels déchets provenant du produit traité (3), lequel organe de filtration (7) est incliné par rapport à l'horizontale pour orienter lesdits déchets sur le côté, par le flux descendant du liquide de traitement (5).

8. Installation selon l'une quelconque des revendications 1 à 7, **caractérisée en ce que** le contenant de récupération (8) comprend une ouverture supérieure (8') à section carrée ou rectangulaire dont la largeur E correspond approximativement à la largeur L du convoyeur sans fin et dont la longueur F correspond approximativement à la longueur B des moyens échangeurs de calories (6).

9. Unité de traitement de produits, **caractérisée en ce qu'**elle comporte au moins deux installations de traitement (K, M, N), selon l'une quelconque des revendications 1 à 8, comprenant chacune :
- un dispositif (4) pour asperger en liquide de traitement (5) le produit (3) porté par le brin supérieur (11') d'un convoyeur sans fin (2),
- des moyens échangeurs de calories, en forme de structure à ruissellement (6), disposés sous ledit brin supérieur de convoyeur (11'),
- un organe de filtration (7) disposé sous lesdits moyens échangeurs de calories (6),
- un contenant (8) de récupération dudit liquide de traitement (5), disposé sous ledit organe de filtration (7), et
- des moyens (9, 10) pour recycler ledit liquide de traitement (5) vers ledit dispositif d'aspersion (4),
lesdits moyens échangeurs de calories (6) desdites deux installations ou plus assurant un traitement différent sur ledit produit (3).
